# EUROPÄISCHE PATENTSCHRIFT

(11) **EP 0 379 957 B1**
(45) Veröffentlichungstag und Bekanntmachung des Hinweises auf die Patenterteilung: **24.08.1994**
(21) Anmeldenummer: 90100913.4
(22) Anmeldetag: 17.01.1990
(51) Int. Cl.: B60T 8/36, B60T 8/42

(54) **Druckregelvorrichtung für Antiblockier- oder Antischlupfsysteme in Kraftfahrzeugen**
Pressure control device for anti-lock or anti-skid systems in motor vehicles
Dispositif de réglage de pression pour systèmes de freinage à antiblocage ou antipatinage montés sur des véhicules

(30) Priorität: 23.01.1989 DE 8900706 U
(43) Veröffentlichungstag der Anmeldung: 01.08.1990
(73) Patentinhaber: LUCAS INDUSTRIES public limited company, Birmingham, B19 2XF West Midlands (GB)
(72) Erfinder: Geilen, Herman Josef, D-5442 Mendig (DE); Glasmacher, Klaus, D-5400 Koblenz (DE)
(74) Vertreter: Goetz, Rupert, Dipl.-Ing.

(56) Entgegenhaltungen:
- EP-A- 0 248 229
- JP-A-63 078 858
- US-A- 4 690 465
- US-A- 4 796 958
- US-A- 4 846 535
- OLHYDRAULIK UND PNEUMATIK. vol. 28, no. 8, August 1984, MAINZ DE Seiten 489 -
- 490; Dr. M. Burckhardt: "Antiblockiersysteme im Vergleich"
- PATENT ABSTRACTS OF JAPAN vol. 7, no. 153 (M-226)(1298) 05 Juli 1983,& JP-A-58 61053 (AKEBONO) 11 April 1983,
- PATENT ABSTRACTS OF JAPAN vol. 8, no. 94 (M-293)(1531) 28 April 1984,& JP-A-59 8554 (AKEBONO) 17 Januar 1984,

## Beschreibung

Bei einer bekannten Druckregelvorrichtung dieser Gattung (EP-A-0 248 229), die für eine Zweikreis-Bremsanlage vorgesehen ist, enthält das Ventilgehäuse für jeden Bremskreis ein Paar Ventilaufnahmen für je ein Regelventil sowie, in seitlichem Abstand davon, eine Speicherkammer sowie eine Dämpfungskammer. Die Speicherkammern sind je einem an die Druckregelvorrichtung anschließbaren Radbremszylinder Zugeordnet und haben die Aufgabe, bei Blockiergefahr Bremsflüssigkeit aus dem zugehörigen Radbremszylinder aufzunehmen, um diesen zu entlasten. Mit jeder Speicherkammer ist eine Rückförderpumpe verbunden, deren Aufgabe es ist, von der zugehörigen Speicherkammer vorübergehend aufgenommene Bremsflüssigkeit über die zugehörige Dämpfungskammer in eine Kammer eines an die Druckregelvorrichtung angebauten Hauptbremszylinders zurückzufördern. Die Rückförderpumpen sind Kolbenpumpen, die von einem gemeinsamen Exzenter angetrieben werden und je ein Saugventil sowie je ein Druckventil aufweisen. Diese beiden Ventile jeder der Rückförderpumpen sind in einem gemeinsamen Pumpengehäuse untergebracht. Die Rückförderpumpen fördern die Bremsflüssigkeit pulsieren in die Dämpfungskammern, in den die Pulsationen so weit gedämpft werden sollen, daß sie nicht vom Hauptbremszylinder ausgehende störende Schwingungen hervorrufen, die beispielsweise an einem Bremspedal spürbar wären.

Eine ähnliche Druckregelvorrichtung ist auch aus der JP-A-58 61 053 bekannt. Ferner ist aus der US-A-48 46 535 eine Druckregelvorrichtung für eine Antiblockieranlage bekannt, bei der in einem Stufenzylinder ein kleinerer und ein größerer Kolben axial hintereinander angeordnet sind. Der kleinere Kolben ist ein Ventilkolben, der eine Verbindung zwischen einem Hauptbremszylinder und einem elektromagnetisch betätigbaren Ventil steuert und durch eine Feder in Richtung zum größeren Kolben hin vorgespannt ist. Dere größere Kolben ist durch eine Feder zum kleineren Kolben hin vorgespannt und begrenzt zusammen mit diesem eine Speicherkammer, in der überschüssige Bremsflüssigkeit gespeichert wird, wenn das elektromagnetisch betätigbare Ventil bei Blockiergefahr umschaltet.

Der Erfindung liegt die Aufgabe zugrunde, eine Druckregelvorrichtung der eingangs beschriebenen Gattung besonders raumsparend zu gestalten.

Die Aufgabe ist erfindungsgemäß mit den Merkmalen des Anspruchs 1 gelöst.

Damit wird erreicht, daß jede der Ventilaufnahmen für ein Regelventil in einem Arbeitsgang mit der zugehörigen Speicher- oder Dämpfungskammer in einem besonders kompakten Ventilgehäuse hergestellt werden kann. Dadurch sowie durch die daraus resultierende Vereinfachung von Verbindungskanälen wird der Zeitbedarf für mechanische Bearbeitung vermindert.

Die Erfindung ist mit besonderem Vorteil anwendbar auf eine Vorrichtung der eingangs beschriebenen Gattung mit
- einem ersten Regelventil, das normalerweise offen ist und einen Hauptbremszylinderanschluß mit einem Radbremszylinderanschluß verbindet,
- einem zweiten Regelventil, das normalerweise geschlossen ist und in geöffnetem Zustand den Radbremszylinderanschluß mit einer Speicherkammer für rückfließende Bremsflüssigkeit und mit einem Einlaßkanal der Rückförderpumpte verbindet, sowie
- einem Auslaßkanal, der die Rückförderpumpte mit einer Dämpfungskammer verbindet.

Eine solche Vorrichtung ist erfindungsgemäß vorzugsweise dadurch weitergebildet, daß die Dämpfungskammer in der Ventilaufnahme für das erste Regelventil angeordnet ist und die Speicherkammer in der Ventilaufnahme für das zweite Regelventil angeordnet ist.

Wenn die Rückförderpumpe ebenso wie bei der bekannten gattungsgemäßen Druckregelvorrichtung eine Kolbenpumpe mit einem Saugventil und einem Druckventil ist, dann ist es gemäß einem weiteren vorteilhaften Merkmal der Erfindung zweckmäßig, daß das Druckventil ebenfalls in der Ventilaufnahme für das erste Regelventil angeordnet ist. Dadurch läßt sich die Größe des gemeinsamen Ventilgehäuses unter sonst gleichen Bedingungen weiter verringern.

Das letztgenannte Merkmal ist erfindungsgemäß vorzugsweise dadurch weitergebildet, daß das Druckventil ein Ventilgehäuse aufweist, das durch das erste Regelventil in dessen Ventilaufnahme festgehalten ist und die Dämpfungskammer von einem Ventilraum trennt, der einen Ventilkörper des Druckventils enthält.

Ein Ausführungsbeispiel der Erfindung wird im folgenden mit weiteren Einzelheiten erläutert. Es zeigen:

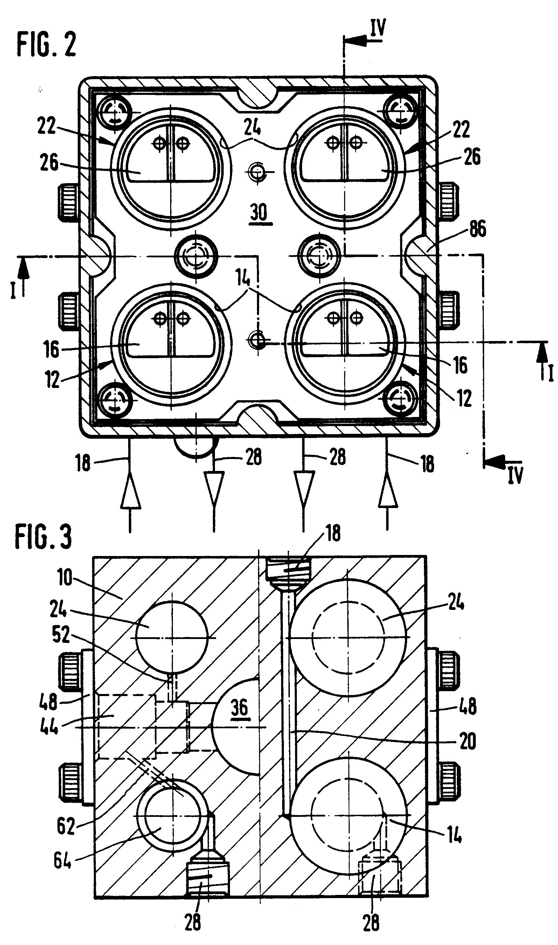

- Fig. 1: eine teilweise als Schnitt I-I in Fig. 2 gezeichnete Seitenansicht einer erfindungsgemäßen Druckregelvorrichtung,
- Fig. 2: den Schnitt II-II in Fig. 1,
- Fig. 3: den Schnitt III-III in Fig. 1,
- Fig. 4: die teilweise als Schnitt gezeichnete Ansicht IV-IV in Fig. 2,
- Fig. 5: ein Schaltschema mit Strömungsverbindungen bei einer normalen Bremsung und
- Fig. 6: dasselbe Schaltschema mit Strömungsverbindungen bei einer Bremsung mit Blockiergefahr.

Die dargestellte Druckregelvorrichtung ist für eine Zweikreis-Bremsanlage eines Kraftfahrzeugs vorgesehen. Sie hat ein Ventilgehäuse 10, das aus einem einzigen Metallblock hergestellt ist. Das Ventilgehäuse 10 enthält für jeden der beiden Bremskreise ein erstes, normalerweise offenes Regelventil 12, das in eine Ventilaufnahme 14 eingebaut und von einem Elektromagneten 16 betätigbar ist. Jedes der beiden normalerweise offenen Regelventile 12 ist zwischen einem Hauptzylinderanschluß 18 und einem Verbindungskanal 20 des zugehörigen Bremskreises angeordnet.

Zu jedem der beiden Bremskreise gehört ferner ein normalerweise geschlossenes zweites Regelventil 22, das in eine Ventilaufnahme 24 des Ventilgehäuses 10 eingebaut und von einem Elektromagneten 26 betätigbar ist. Die Ventilaufnahme 24 jedes der beiden normalerweise geschlossenen zweiten Regelventile 22 bildet eine ständig offene Verbindung zwischen dem Verbindungskanal 20 und einem Radzylinderanschluß 28 des betreffenden Bremskreises.

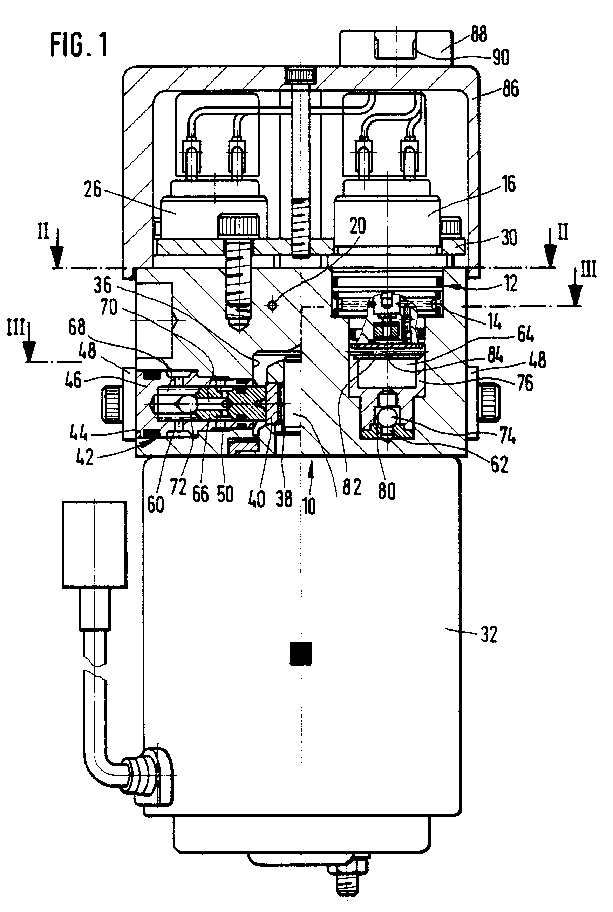

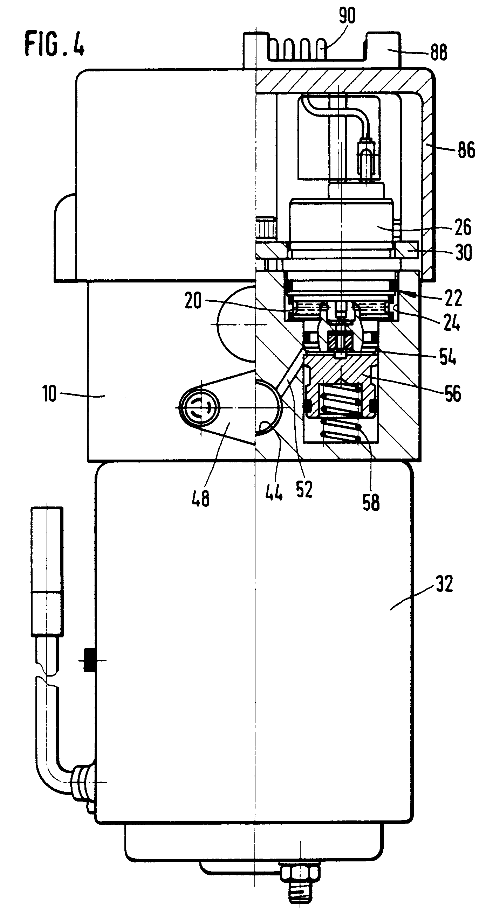

Sämtliche Elektromagneten 16 und 26 werden von einer gemeinsamen Halteplatte 30 mit dem Ventilgehäuse 10 zusammengespannt und halten dadurch auch die zugehörigen Regelventile 12 bzw. 22 sicher und abdichtend in ihren Ventilaufnahmen 14 bzw. 24 fest. An der von der Halteplatte 30 abgewandten, in Fig. 1 und 4 unteren Seite des Ventilgehäuses 10 ist ein Elektromotor 32 befestigt, dessen Welle mit einem an ihr ausgebildeten exzentrischen Wellenzapfen 34 in eine zentrale Ausnehmung 36 des Ventilgehäuses 10 hineinragt und ein Wälzlager 38 mit einem Außenring 40 trägt.

Quer zur Achse des Elektromotors 32 sind im Ventilgehäuse 10 zwei Rückförderpumpen 42 in bezug auf die zentrale Ausnehmung 36 einander diametral gegenüberliegend in je einer radialen Pumpenaufnahme 44 angeordnet. Jede der beiden Rückförderpumpen 42 hat ein im wesentlichen rotationssymmetrisches Pumpengehäuse 46, das durch eine Halteplatte 48 in der zugehörigen Pumpenaufnahme 44 festgehalten ist.

Die beiden Rückförderpumpen 42 sind je einem der beiden Bremskreise zugeordnet und weisen je einen Einlaßkanal 50 auf, der durch einen Verbindungskanal 52 mit einer Speicherkammer 54 des zugehörigen Bremskreises ständig verbunden ist. Die beiden Speicherkammern 54 enthalten je einen Expanderkolben 56, der infolge Belastung durch eine Feder 58 stets bestrebt ist, das Volumen der zugehörigen Speicherkammer so klein wie möglich zu halten. Jede der beiden Speicherkammern 54 ist als Bestandteil oder unmittelbare Fortsetzung der Ventilaufnahme 24 des zugehörigen normalerweise geschlossenen Regelventils 22 ausgebildet und durch dieses normalerweise vom zugehörigen Radzylinderanschluß 28 getrennt. Das Regelventil 22 begrenzt den Hub des Expanderkolbens 56 nach oben und macht jede weitere Befestigung dieses Kolbens entbehrlich.

Jede der beiden Rückförderpumpen 42 hat ferner einen Auslaßkanal 60, der durch einen Verbindungskanal 62 mit einer Dämpfungskammer 64 des zugehörigen Bremskreises verbunden ist. Jede der beiden Dämpfungskammern 64 ist innerhalb oder als unmittelbare Fortsetzung der Ventilaufnahme 14 des zugehörigen, normalerweise offenen Regelventils 12 ausgebildet. Die beiden Rückförderpumpen 42 haben je einen Pumpenkolben 66, der im zugehörigen Pumpengehäuse 46 geführt und von einer Feder 68 radial nach innen vorgespannt ist, so daß er sich am Außenring 40 abstützt und bei Drehung des exzentrischen Wellenzapfens 34 hin- und herbewegt wird.

Der Pumpenkolben 66 jeder Rückförderpumpe 42 weist einen axialen Kanal 70 auf, der von einem im zugehörigen Pumpengehäuse 46 angeordneten Saugventil 72 gesteuert ist. Zu jeder der beiden Rückförderpumpen 42 gehört ferner ein Druckventil 74, das jedoch im Gegensatz zum Saugventil 72 nicht innerhalb des zugehörigen Pumpengehäuses 46 angeordnet ist, sondern in einem getrennten Ventilgehäuse 76, das von der Ventilaufnahme 14 des zugehörigen, normalweise offenen Regelventils 12 aus in die zugehörige Dämpfungskammer 64 eingesetzt ist und diese von einem Ventilraum 80 trennt.

Auf diese Weise ist jedes der beiden Druckventile 74 gleichachsig mit dem zugehörigen Regelventil 12 und Ventilgehäuse 76 angeordnet. Jede der Dämpfungskammern 64 ist gegen die zugehörige Ventilaufnahme 14 durch eine Platte 82 abgegrenzt, die das zugehörige Ventilgehäuse 76 nach oben abschließt und in ihrer Mitte eine kleine Drosselbohrung 84 aufweist. Das Ventilgehäuse 76 ist allein durch das darüber angeordnete Regelventil 12 in seiner Einbaustellung gehalten. Die Platte 82 ist einfach in das Ventilgehäuse 76 eingepreßt und läßt sich zusammen mit diesem, oder auch alleine, leicht gegen eine Platte 82 mit größerer oder kleinerer Drosselbohrung 84 austauschen.

Die vier Regelventile 12 und 22 sowie die zugehörigen Elektromagneten 16 und 26 sind durch eine gemeinsame Kappe 86 abgedeckt, die auf das Ventilgehäuse 10 aufgesetzt und an diesem festgeschraubt ist. Auf der Kappe 86 ist eine Steckerleiste 88 mit Steckern 90 zum Anschließen der Elektromagneten 16 und 26 an eine elektronische Regelvorrichtung angeordnet.

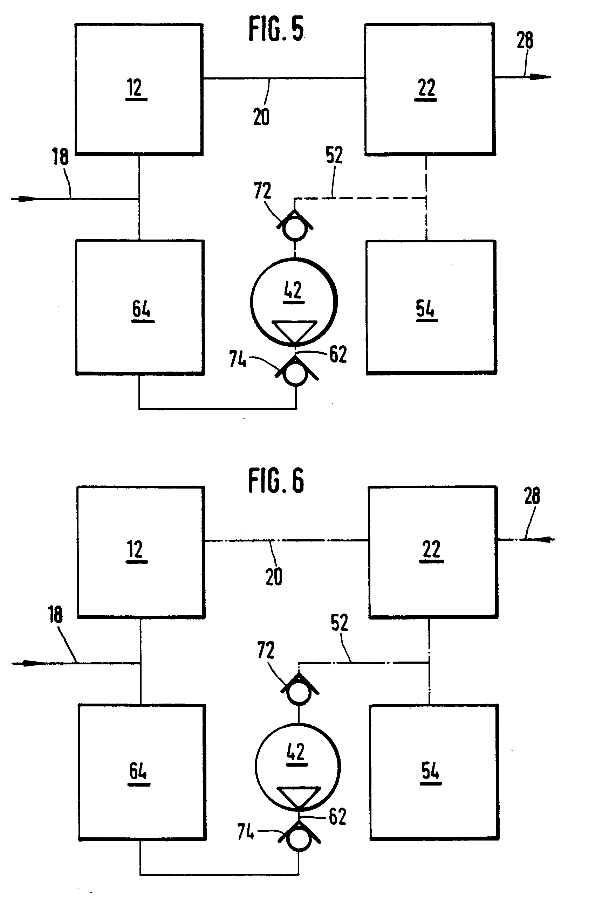

In Fig. 5 und 6 sind Funktionsteile der beschriebenen Druckregelvorrichtung, die zu einem der beiden Bremskreise gehören, schematisch dargestellt. Der andere Bremskreis ist dem dargestellten vollständig gleich und deshalb nicht gezeichnet. Verbindungskanäle, in denen ein im zugehörigen (nicht dargestellten) Hauptbremszylinder erzeugter Druck herrscht, sind mit vollen Linien gezeichnet. Verbindungskanäle, in denen ein zum Verhindern eines Blockierzustandes gesteuerter geringerer Druck herrscht, sind mit strichpunktierten Linien gezeichnet, während drucklose Verbindungskanäle mit gestrichelten Linien gezeichnet sind.

Gemäß Fig. 5 findet eine normale Bremsung statt; dabei ist das erste Regelventil 12 des betreffenden Bremskreises geöffnet und das zweite Regelventil 22 geschlossen. Bremsflüssigkeit gelangt unter einem Druck, der in einer Kammer des Hauptbremszylinders erzeugt worden ist, vom Hauptzylinderanschluß 18 aus durch das Regelventil 12 hindurch in den Verbindungskanal 20 und von dort weiter an dem zweiten Regelventil 22 vorbei zum zugehörigen Radzylinderanschluß 28. Die zugehörige Speicherkammer 54 sowie der Verbindungskanal 52 zur zugehörigen Rückförderpumpe 42 hin sind drucklos. In der Dämpfungskammer 64 herrscht hingegen der volle Druck, der durch den Hauptzylinderanschluß 18 eingeleitet wird.

Wenn nun an dem zugehörigen Fahrzeugrad Blockiergefahr entsteht und ein entsprechendes Signal ausgelöst wird, das die Regelventile 12 und 22 umsteuert, ergibt sich der in Fig. 6 abgebildete Zustand. Dabei gelangt Bremsflüssigkeit mit dem vollen, durch den Hauptzylinderanschluß 18 eingeleiteten Druck nicht mehr in den Verbindungskanal 20. Der im zugehörigen Radbremszylinder herrschende Druck kann also nicht mehr steigen, nachdem das erste Regelventil 12 geschlossen hat. Sobald das zweite Regelventil 22 geöffnet hat, wird der zugehörige Radbremszylinder dadurch von Druck entlastet, daß Bremsflüssigkeit vom Radzylinderanschluß 28 durch das zweite Regelventil 22 hindurch in den Verbindungskanal 52 und in die Speicherkammer 54 gelangt. Dieser Druck verdrängt den Expanderkolben 56, so daß die Speicherkammer 54 vorübergehend eine ausreichende Menge Bremsflüssigkeit aufnehmen kann, um den Druck im zugehörigen Radbremszylinder so weit sinken zu lassen, daß die Blockiergefahr behoben wird. Inzwischen ist der Elektromotor 32 angelaufen; infolgedessen pumpt die zum dargestellten Bremskreis gehörige Rückförderpumpe 42 die Speicherkammer 54 allmählich wieder leer, indem sie Bremsflüssigkeit durch den Verbindungskanal 62 und die zugehörige Dämpfungskammer 64 in den Hauptbremszylinder zurückfördert.

## Patentansprüche

1. Druckregelvorrichtung für Antiblockier- oder Antischlupfsysteme in Kraftfahrzeugen mit
- Ventilaufnahmen (14, 24) für je ein Regelventil (12, 22), das von einem Elektromagneten (16 bzw. 26) betätigbar ist,
- mindestens einer Pumpenaufnahme (44) für eine Rückförderpumpe (42),
- mindestens einer Speicherkammer (54), die an die Rückförderpumpe (42) angeschlossen und durch einen Expanderkolben (56) begrenzt ist, und
- mindestens eine Dämpfungskammer (64), wobei
- die Regelventile (12, 22), Pumpenaufnahme (44) und Kammern (54, 64) in einem gemeinsamen Ventilgehäuse (10) angeordnet sind,
dadurch gekennzeichnet,
daß die Speicher- und Dämpfungskammern (54, 64) in einer gemeinsamen Bohrung des Ventilgehäuses (10) mit je einer der Ventilaufnahmen (14, 24) ausgebildet sind.

2. Vorrichtung nach Anspruch 1 mit
- einem ersten (12) der Regelventile, das normalerweise offen ist und einen Hauptzylinderanschluß (18) mit einem Radzylinderanschluß (28) verbindet,
- einem zweiten (22) der Regelventile, das normalerweise geschlossen ist und in geöffnetem Zustand den Radzylinderanschluß (28) mit einer Speicherkammer (54) für rückfließende Bremsflüssigkeit und mit einem Einlaßkanal (50) der Rückförderpumpe (42) verbindet, sowie
- einem Auslaßkanal (60), der die Rückförderpumpe (42) mit einer Dämpfungskammer (64) verbindet,
dadurch **gekennzeichnet,** daß die Dämpfungskammer (64) in der Ventilaufnahme (14) für das erste Regelventil (12) angeordnet ist und die Speicherkammer (54) in der Ventilaufnahme (24) für das zweite Regelventil (22) angeordnet ist.

3. Vorrichtung nach Anspruch 2, bei der die Rückförderpumpe (42) eine Kolbenpumpe mit einem Saugventil (72) und einem Druckventil (74) ist,
dadurch **gekennzeichnet,** daß das Druckventil (74) ebenfalls in der Ventilaufnahme (14) für das erste Regelventil (12) angeordnet ist.

4. Vorrichtung nach Anspruch 3,
dadurch **gekennzeichnet,** daß das Druckventil (74) ein Ventilgehäuse (76) aufweist, das durch das erste Regelventil (12) in dessen Ventilaufnahme (14) festgehalten ist und die Dämpfungskammer (64) von einem Ventilraum (80) trennt, der einen Ventilkörper des Druckventils (74) enthält.

5. Vorrichtung nach Anspruch 4,
dadurch **gekennzeichnet,** daß die Dämp-fungskammer (64) im Ventilgehäuse (76) angeordnet und von dem ersten Regelventil (12) durch eine Platte (82) mit einer Drosselbohrung (84) getrennt ist.

## Claims

1. A pressure control device for anti-lock or anti-skid systems in motor vehicles, comprising
- valve receiving means (14, 24) for a control valve (12,22) each which is adapted to be actuated by an electromagnet (16 and 26, respectively),
- at least one pump receiving means (44) for a return pump (42),
- at least one storing chamber (54) connected to the return pump (42) and defined by an expansion piston (56), and
- at least one damping chamber (64),
- the control valves (12, 22), the pump receiving means (44), and the chambers (54, 56) being arranged in a common valve housing (10), **characterized** in that the storing and damping chambers (54, 56) are formed in a common bore of the valve housing (10) with one each of the valve receiving means (14, 24).

2. The device as claimed in claim 1, comprising
- a first one (12) of the control valves which is normally open and connects a master cylinder connection (18) to a wheel cylinder connection (28),
- a second one (22) of the control valves which is normally closed and, when open, connects the wheel cylinder connection (28) to a storing chamber (54) for returning brake fluid and to an inlet passage (50) of the return pump (42), as well as
- an outlet passage (60) which connects the return pump (42) to a damping chamber (64), **characterized** in that the damping chamber (64) is arranged in the valve receiving means (14) for the first control valve (12), and the storing chamber (54) is arranged in the valve receiving means (24) for the second control valve (22).

3. The device as claimed in claim 2 wherein the return pump (42) is a reciprocating pump equipped with a suction valve (72) and a pressure valve (74), **characterized** in that the pressure valve (74), too, is arranged in the valve receiving means (14) for the first control valve (12).

4. The device as claimed in claim 3, characterized in that the pressure valve (74) comprises a valve body (76) which is retained by the first control valve (12) in the valve receiving means (14) thereof and separates the damping chamber (64) from a valve chamber (80) containing a valve closing member of the pressure valve (74).

5. The device as claimed in claim 4, characterized in that the damping chamber (64) is arranged in the valve body (76) and separated from the first control valve (12) by a plate (82) formed with a throttle bore (84).

## Revendications

1. Dispositif de réglage de pression pour systèmes de freinage à antiblocage ou antipatinage montés sur des véhicules, comportant
- des logements de soupapes (14, 24) prévus chacun pour une soupape de réglage (12, 22) qui est commandée à partir d'un électro-aimant (16 ou 26) ,
- au moins un logement de pompe (44) pour une pompe de refoulement (42),
- au moins une chambre d'accumulation (54) qui est reliée à la pompe de refoulement (42) et limitée par un piston de détente (56), et
- au moins une chambre d'amortissement (64),
- les soupapes de réglage (12, 22), le logement de pompe (44), et les chambres (54, 64) étant disposés dans un boîtier à soupapes (10) commun,
caractérisé en ce que les chambres d'accumulation et d'amortissement (54, 64) se présentent sous forme d'un perçage commun du boîtier à soupapes (10) commun chaque fois avec un des logements de soupapes (14, 24).

2. Dispositif selon la revendication 1, comportant
- une première (12) des soupapes de réglage qui est normalement en position ouverte et qui relie un raccord de maître-cylindre (18) avec un raccord de cylindre de frein de roue (28),
- une seconde (22) des soupapes de réglage qui est normalement en position fermée et qui, en position ouverte, relie le raccord de cylindre de frein de roue (28) à une chambre d'accumulation (54) pour liquide de frein refluant et à un conduit d'admission (50) de la pompe de refoulement (42), et
- un conduit d'évacuation (60) qui relie la pompe de refoulement (42) à une chambre d'amortissement (64),
caractérisé en ce que la chambre d'amortissement (64) est disposée dans le logement de soupape (14) réservé à la première soupape de réglage (12) et que la chambre d'accumulation (54) est disposée dans le logement de soupape (24) réservé à la seconde soupape de réglage (22).

3. Dispositif selon la revendication 2, selon lequel la pompe de refoulement (42) est une pompe à piston comportant une soupape d'aspiration (72) et une soupape de refoulement (74),
caractérisé en ce que la soupape de refoulement (74) est disposée également dans le logement de soupape (14) destiné à la première soupape de réglage (12).

4. Dispositif selon la revendication 3,
caractérisé en ce que la soupape de refoulement (74) présente un boîtier de soupape (76) qui est maintenu par la première soupape de réglage (12) dans le logement de soupape (14) de celle-ci et sépare la chambre d'amortissement (64) d'une chambre de soupape (80) qui comporte un corps de soupape de la soupape de refoulement (74).

5. Dispositif selon la revendication 4,
caractérisé en ce que la chambre d'amortissement (64) est disposée dans le boîtier de soupape (76) et séparée de la première soupape de réglage (12) par une plaque (82) munie d'un orifice d'étranglement (84).
